# EUROPÄISCHE PATENTSCHRIFT

(11) **EP 4 061 670 B1**
(45) Veröffentlichungstag und Bekanntmachung des Hinweises auf die Patenterteilung: **25.09.2024**
(21) Anmeldenummer: 20810938.9
(22) Anmeldetag: 19.11.2020
(51) Int. Cl.: B60N 2/36

(54) **SCHLOSSEINHEIT MIT KOPPLUNGSMECHANISMUS FÜR EINEN INTEGRIERTEN LEERHUB**
LOCK UNIT WITH A COUPLING MECHANISM FOR INTEGRATED IDLE DISPLACEMENT
ENSEMBLE SERRURE À MÉCANISME D'ACCOUPLEMENT POUR UNE COURSE À VIDE INTÉGRÉE

(30) Priorität: 22.11.2019 DE 102019218103
(43) Veröffentlichungstag der Anmeldung: 28.09.2022
(73) Patentinhaber: Brose Fahrzeugteile SE & Co. Kommanditgesellschaft, Coburg, 96450 Coburg (DE)
(72) Erfinder: KRÜGER, Frieder, 96450 Coburg (DE); TIETZ, Sebastian, 98553 Schleusingen (DE); WELSCH, Markus, 96215 Lichtenfels (DE); KNAB, Michael, 96247 Schwürbitz (DE); SCHAFHAUSER, Armin, 96476 Bad Rodach (DE)
(74) Vertreter: Maikowski & Ninnemann Patentanwälte Partnerschaft mbB
(86) Internationale Anmeldenummer: PCT/EP2020/082685
(87) Internationale Veröffentlichungsnummer: WO 2021/099464

(56) Entgegenhaltungen:
- DE-A1- 102013 216 721
- US-A1- 2010 270 455

## Beschreibung

Die vorgeschlagene Lösung betrifft eine Schlosseinheit für ein Fahrzeug. Derartige Schlosseinheiten für ein Fahrzeug sind beispielsweise in der US 2010/270455 A1 und der DE 2013 216721 A1 beschrieben.

Schlosseinheiten für den Fahrzeugbereich sind in unterschiedlicher Ausprägung bekannt. Beispielsweise kommen Schlosseinheiten für die Verriegelung von Fahrzeugsitzkomponenten zum Einsatz, beispielsweise um ein Sitzuntergestell an einer Bodenbaugruppe lösbar zu verriegeln oder eine Rückenlehne eines Fahrzeugsitzes an einem Sitzuntergestell lösbar zu verriegeln. Eine Schlosseinheit umfasst hierbei grundsätzlich einen ein- oder mehrteiligen Träger, ein schwenkbar an dem Träger zwischen einer Verriegelungsposition und einer Freigabeposition schwenkbares Verriegelungselement sowie ein Sperrelement zum Sichern des Verriegelungselements in seiner Verriegelungsposition. Das Sperrelement ist hierbei zwischen einer Sperrposition und einer Entriegelungsposition an dem Träger schwenkbar gehalten, sodass das Sperrelement in seiner Sperrposition das in der Verriegelungsposition vorliegende Verriegelungselement gegen eine Verstellung in die Freigabeposition sperrt und in seiner Entriegelungsposition eine Verstellung des Verriegelungselements aus der Verriegelungsposition in seine Freigabeposition gestattet. Um das Sperrelement aus der Sperrposition in Richtung der Entriegelungsposition zu schwenken und damit die Schlosseinheit zu entriegeln, ist an dem Träger der Schlosseinheit ein Betätigungselement vorgesehen, das innerhalb eines vorgegebenen Verstellbereichs verstellbar ist. Beispielsweise handelt es sich bei dem Betätigungselement um einen von außerhalb eines Gehäuses der Schlosseinheit zugänglichen Entriegelungshebel für eine manuelle oder motorische Betätigung der Schlosseinheit. In dem zuletzt genannten Fall kann somit der Entriegelungshebel zum Beispiel über einen Antriebsmotor verstellbar sein, um die Schlosseinheit fremdkraftbetätigt entriegeln zu können.

Typischerweise wirkt bei bisher bekannten Schlosseinheiten ein Betätigungselement unmittelbar auf das Sperrelement ein, sodass eine Verstellbewegung des Betätigungselements unmittelbar in einer Schwenkbewegung des Sperrelements resultiert. Hierdurch ist ein bestimmter Typ von Schlosseinheit auch regelmäßig nicht für andere Anwendungszwecke oder andere Bauraumszenarien ohne eine vergleichsweise aufwendige konstruktive Anpassung nutzbar, da beispielsweise ein Betätigungsweg und eine Betätigungsrichtung des Betätigungselements unmittelbar mit der Schwenkbewegung des Sperrelements gekoppelt sind und dementsprechend eine in dieser Hinsicht gewünschte Änderung unmittelbar zu einer vergleichsweise aufwändigen Anpassung des Sperrelements führt.

Hiervon ausgehend liegt der vorgeschlagenen Lösung die Aufgabe zugrunde, eine verbesserte Schlosseinheit zur Verfügung zu stellen.

Diese Aufgabe ist mit einer Schlosseinheit des Anspruchs 1 gelöst.

Bei einer vorgeschlagenen Schlosseinheit ist das Betätigungselement über einen Kopplungsmechanismus mit dem Sperrelement gekoppelt, über den eine Verstellbewegung des Betätigungselements lediglich in einem Teilbereich des Verstellbereichs des Betätigungselements in eine Schwenkbewegung des Sperrelements in Richtung seiner Entriegelungsposition umsetzbar ist.

Über den Kopplungsmechanismus wird folglich in einem Teilbereich eine Verstellbewegung des Betätigungselements in eine Schwenkbewegung des Sperrelement umgesetzt, während in wenigstens einem anderen Teilbereich des betätigungselementseitigen Verstellbereichs eine Verstellbewegung des Betätigungselements ohne Schwenkbewegung des Sperrelement bleibt und das Betätigungselement folglich eine von einer Schwenkbewegung des Sperrelements unabhängige Verstellbewegung ausführen kann (d.h., eine Verstellbewegung, die nicht in einer Schwenkbewegung des Sperrelements resultiert). Derart ist über den Kopplungsmechanismus folglich eine Leerhubfunktion (auch als Überhubfunktion bezeichnet) in die Schlosseinheit integriert. Es ist somit eine Leerhub- oder Überhubbewegung des Betätigungselements ermöglicht, die zu keiner Schwenkbewegung des Sperrelements führt. Hierdurch ist wiederum die Flexibilität einer derartigen Schlosseinheit für unterschiedliche Bauraumsituationen und Verwendungsszenarien erheblich erhöht.

Beispielsweise ist eine mechanische Kopplung mit einer weiteren Schlosseinheit möglich, bei der beide Schlosseinheiten durch Betätigung eines einzelnen Betätigungselements bedient und insbesondere entriegelt werden sollen. Durch die in wenigstens eine Schlosseinheit entsprechend der vorgeschlagenen Lösungen integrierte Leerhubfunktion kann eine Verstellbewegung des Betätigungselements zu einer Schwenkbewegung eines Sperrelements in einer Schlosseinheit führen, während in der anderen Schlosseinheit lediglich ein Leerweg überbrückt wird, ohne das zugehörige Sperrelement zu schwenken. Es lassen sich somit verschiedene Betätigungsarten und/oder verschiedene Betätigungskraft- und damit Verstellkraftverläufe für die Betätigung einer oder mehrerer Schlosseinheiten vergleichsweise einfach realisieren. Insbesondere ist über eine in eine Schlosseinheit integrierte Leerhubfunktion ein Toleranzausgleich, zum Beispiel bei mehreren (mindestens zwei) miteinander mechanisch gekoppelten Schlosseinheiten, einfacher möglich.

In einer Ausführungsvariante ist über den Kopplungsmechanismus eine Leerhubfunktion in die Schlosseinheit integriert, bei der das Betätigungselement zum Lösen einer über die Schlosseinheit bereitgestellten Verriegelung über zumindest einen Leerweg seines Verstellbereichs verstellbar ist, ohne eine Schwenkbewegung des Sperrelements zu verursachen. Der Leerweg kann hierbei, bezogen auf eine Ausgangslage des Betätigungselements, aus der das Betätigungselement innerhalb des Verstellbereichs in eine Endlage verstellbar ist, um das Sperrelement aus seiner Sperreposition in Richtung seiner Entriegelungsposition zu verstellen,
- am Anfang des Verstellbereichs,
- in der Mitte des Verstellbereichs,
- am Ende des Verstellbereichs oder
- am Anfang und am Ende des Verstellbereichs vorgesehen sein.
Über die integrierte Leerhubfunktion kann somit das Betätigungselement insbesondere bereits zu Beginn einer Verstellung aus der Ausgangslage zunächst einen Leerweg überbrücken, bevor die weitere Verstellbewegung des Betätigungselements zu einer Schwenkbewegung des Sperrelements führt. Alternativ kann ein Leerweg am Ende der Verstellbewegung des Betätigungselements vorgesehen sein, sodass ab einer Verstellposition des Betätigungselements bis zum Erreichen der Endlage keine Schwenkbewegung des Sperrelements mehr durch das Betätigungselement verursacht wird. Alternativ kann ein Leerweg zwischen zwei Teilbereichen des für das Betätigungselement vorgegebenen Verstellbereichs vorgesehen sein, in denen jeweils eine Verstellbewegung des Betätigungselements zu einer Schwenkbewegung des Sperrelements führt. So kann beispielsweise bei einer anfänglichen Verstellbewegung des Betätigungselements das Sperrelement zunächst hierdurch gesteuert geschwenkt werden, bevor ein Leerweg durch das Betätigungselement überbrückt wird, in dem keine Schwenkbewegung des Sperrelements erfolgt, um dann im Anschluss bei weiterem Verstellen des Betätigungselements wieder eine Schwenkbewegung des Sperrelements zu verursachen. Alternativ kann ein Leerweg sowohl am Anfang als auch am Ende des für das Betätigungselement vorgegebenen Verstellbereichs vorgesehen sein.

Grundsätzlich kann das Betätigungselement selbst schwenkbar gelagert sein, insbesondere um die Drehachse des Verriegelungselements. Eine Schwenkbewegung des Betätigungselements resultiert somit zumindest über einen Teilbereich des Verstellbereichs in einer Schwenkbewegung des Sperrelements. Alternativ oder ergänzend kann das Betätigungselement ebenfalls an dem ein- oder mehrteiligen Träger der Schlosseinheit schwenkbar gelagert sein.

In einer Ausführungsvariante umfasst der Kopplungsmechanismus zur kompakten Ausgestaltung der Schlosseinheit ein koaxial zu einer Drehachse des Sperrelements drehbar gelagertes Mitnehmerelement, das mit dem Sperrelement formschlüssig in Eingriff steht. Bei einer derartigen Ausführungsvariante wird folglich eine durch das Betätigungselement in den Kopplungsmechanismus eingeleitete Verstellkraft über ein drehbar gelagertes Mitnehmerelement übertragen, das über wenigstens einen Formschluss diese Verstellkraft an das Sperrelement übertragen kann. Für den formschlüssigen Eingriff mit dem Sperrelement kann an dem Mitnehmerelement beispielsweise mindestens ein Mitnehmerabschnitt vorgesehen sein, der, bezogen auf die Drehachse des Sperrelements, axial vorstehend ausgebildet ist.

Für die Übertragung einer Verstellkraft an das mit dem Sperrelement formschlüssigen in Eingriff stehende Mitnehmerelement kann der Kopplungsmechanismus mindestens ein Mitnehmerkoppelglied umfassen, das, bezogen auf die Drehachse des Sperrelements (und damit des Mitnehmerelements), exzentrisch an dem Mitnehmerelement angelenkt ist. Durch die exzentrische Anlenkung an dem Mitnehmerelement kann über das Mitnehmerkoppelglied an einem virtuellen Hebelarm eine Verstellkraft eingeleitet werden, die das Mitnehmerelement mit einem Drehmoment um die mit der Drehachse des Sperrelements zusammenfallende Drehachse beaufschlagt.

Der Kopplungsmechanismus umfasst in einer ersten Ausführungsform mindestens eine Kulissenführung für die Umsetzung einer Verstellbewegung des Betätigungselements in eine Schwenkbewegung des Sperrelements, wobei die mindestens eine Kulissenführung eine gegenüber dem Träger unbewegliche , d.h. trägerfeste, Führungskulisse umfasst, relativ zu der das Betätigungselement verstellbar ist. Der Kopplungsmechanismus umfasst folglich mindestens eine Kulissenführung zur Übertragung einer das Sperrelement in Richtung der Entriegelungsposition verstellenden Verstellkraft von dem Betätigungselement an das Sperrelement.

Die mindestens eine Kulissenführung kann hierbei eine mit dem Betätigungselement verstellbare Führungskulisse umfassen. Die eine verstellbare Führungskulisse ist folglich mit dem Betätigungselement verstellbar, während das Betätigungselement relativ zu der anderen unbeweglichen Führungskulisse verstellbar ist. Je nach einzeln oder im Verbund vorhandener Führungskulisse der Kulissenführung können unterschiedliche Verstellbewegungen über den Kopplungsmechanismus umgesetzt werden, um bei einer Verstellbewegung des Betätigungselements eine Verstellkraft - mit Leerhubfunktion - an das Sperrelement zu übertragen.

Beispielsweise sieht eine Ausführungsvariante vor, dass die gegenüber dem Träger unbewegliche Führungskulisse zwei Kulissenabschnitte aufweist, die sich hinsichtlich eines hiermit umgesetzten Übersetzungsverhältnisses zwischen einer Verstellbewegung des Betätigungselements und einer resultierenden Schwenkbewegung des Sperrelements voneinander unterscheiden. So kann beispielsweise einer der zwei verschiedenen Kulissenabschnitte für eine kontinuierliche Übersetzung eingerichtet und vorgesehen sein. Eine derartige kontinuierliche Übersetzung ist dann beispielsweise für eine Verstellbewegung des Betätigungselements vorgesehen, die in eine korrespondierende Schwenkbewegung des Sperrelements umgesetzt wird. Ferner kann ein anderer, zweiter Kulissenabschnitt für eine diskontinuierliche Übersetzung eingerichtet und vorgesehen sein. Mit einem derartigen Kulissenabschnitt ist dann beispielsweise ein Überhub des Betätigungselements realisiert, sodass eine (weitere) Verstellbewegung des Betätigungselements in Richtung seiner Endlage zu keiner oder allenfalls - im Verhältnis zu einem Verstellweg des Betätigungselements - geringfügigen Schwenkbewegung des Sperrelements führt.

In einem Ausführungsbeispiel definieren die zwei Kulissenabschnitte zwei Abschnitte einer Führungsbahn für ein an der Führungskulisse entlang zu führendes Führungselement der mindestens einen Kulissenführung, wobei diese zwei Abschnitte der Führungsbahn unter einem Winkel, z.B. unter einem Winkel im Bereich von 70° bis 160°, zueinander orientiert sind. Das Führungselement wird somit in seinem Verlauf entlang der Führungsbahn in einem Übergang von einem Kulissenabschnitt in den anderen Kulissenabschnitt umgelenkt, sodass hierüber ein entlang der Führungsbahn variables, d.h., sich veränderndes Übersetzungsverhältnis realisierbar ist. Insbesondere kann die Führungsbahn in wenigstens einem Abschnitt einen gekrümmten Verlauf aufweisen, der durch die Geometrie des jeweiligen Kulissenabschnitts vorgegeben ist.

In Kombination der mindestens einen Kulissenführung mit einem Mitnehmerkoppelglied des Kopplungsmechanismus, das exzentrisch an dem Mitnehmerelement angelenkt ist, kann beispielsweise vorgesehen sein, dass an dem Mitnehmerkoppelglied ein Führungselement der mindestens einen Kulissenführung vorgesehen ist, das an einer Führungskulisse der mindestens eine Kulissenführung verschieblich gehalten ist. Über das Verschieben des koppelgliedseitigen Führungselements entlang der Führungskulisse ist dann folglich das Mitnehmerkoppelglied verstellbar, sodass dieses über eine Anlenkung an dem Mitnehmerelement eine Verstellkraft auf das Mitnehmerelement zur Verstellung des Sperrelements überträgt.

Insbesondere kann in diesem Zusammenhang vorgesehen sein, dass das Führungselement des Mitnehmerkoppelglieds sowohl an der verstellbaren Führungskulisse als auch an der gegenüber dem Träger unbeweglichen Führungskulisse verschieblich gehalten ist und sich die Führungskulissen zumindest teilweise überdecken. Das Führungselement des Mitnehmerkoppelglieds ist somit innerhalb des Kopplungsmechanismus doppelt kulissengeführt. Derart kann dem Führungselement eine vergleichsweise komplexe Verstellbahn in Folge einer Verstellbewegung des Betätigungselements aufgezwungen werden, gleichwohl die hierfür vorgesehene Mechanik vergleichsweise einfach und ausfallsicher zu realisieren ist.

In einer alternativen Ausführungsform umfasst der Kopplungsmechanismus der Schlosseinheit mindestens ein eine Vorspannkraft aufbringendes Federelement, gegen dessen Vorspannkraft das Betätigungselement innerhalb seines Verstellbereichs einmal zur Überbrückung eines Leerwegs verstellbar ist. Der Kopplungsmechanismus sieht somit eine federelementunterstützte Kraftkupplung vor, um einen Leerweg in die Schlosseinheit zu integrieren. Das Betätigungselement ist folglich wenigstens einmal innerhalb seines Verstellbereichs gegen die Vorspannkraft des mindestens einen Federelements verstellbar, ohne dass hiermit eine Schwenkbewegung des Sperrelements einhergeht.

Hierbei ist vorgesehen, dass durch das mindestens eine Federelement das Betätigungselement gegenüber einem verstellbaren Betätigerkoppelglied des Kopplungsmechanismus vorgespannt ist. Dieses Betätigerkoppelglied ist hierbei während einer Verstellung des Betätigungselements in dem einen Teilbereich des Verstellbereichs, in dem aus der Verstellung des Betätigungselements eine Schwenkbewegung des Sperrelements resultiert, zusammen mit dem Betätigungselement verstellbar, indem eine an dem Betätigungselement aufgebrachte Verstellkraft über das mindestens eine Federelement an das Betätigerkoppelglied übertragbar ist. Demgegenüber ist das Betätigungselement in dem anderen Teilbereich, in dem der Leerweg zu überbrücken ist, gegen die von dem mindestens einen Federelement aufgebrachte Vorspannkraft relativ zu dem Betätigerkoppelglied verstellbar.

Hierbei kann der Beginn des Leerwegs, bezogen auf eine Verstellbewegung des Betätigungselements zum Schwenken des Sperrelements in seine Entriegelungsposition (und damit zum Entriegeln der Schlosseinheit), durch einen mechanischen Anschlag definiert sein, an dem das Betätigerkoppelglied am Ende des einen Teilbereichs anschlägt. Der mechanische Anschlag kann zwischen zusammenwirkenden Koppelgliedern des Kopplungsmechanismus oder innerhalb eines das Verriegelungselement und das Sperrelement umfassenden Verriegelungsmechanismus der Schlosseinheit vorgesehen sein. Maßgeblich ist in diesem Zusammenhang lediglich, dass das über das mindestens eine Federelement gegen das Betätigerkoppelglied vorgespannte Betätigungselement zunächst bis zum Erreichen des Anschlags zusammen mit dem Betätigerkoppelglied verstellbar ist und infolge des Erreichens des Anschlags eine erhöhte Verstellkraft auf das Betätigungselement aufgebracht werden muss, um die Vorspannkraft des mindestens einen Federelements zu überwinden und das Betätigungselement relativ zu dem Betätigerkoppelglied zu verstellen. Erst im Anschluss ist das Betätigungselement wieder mit dem gespannten Federelement und dem Betätigerkoppelglied verstellbar, was zu einer Schwenkbewegung des Sperrelements führt.

In einer Ausführungsvariante ist das mindestens eine Federelement des Kopplungsmechanismus zusätzlich zu mindestens einer Rückstellfeder vorgesehen, die das Betätigungselement in Richtung einer Ausgangslage vorspannt, aus der das Betätigungselement für ein Schwenken des Sperrelements in seine Entriegelungsposition (und damit für eine Entriegelung der Schlosseinheit) in Richtung einer Endlage zu verstellen ist. Die Schlosseinheit weist somit in dieser Ausführungsvariante wenigstens zwei unterschiedliche Federelemente auf, denen innerhalb der Schlosseinheit unterschiedliche Funktionen zugewiesen sind. Während die Rückstellfeder für eine selbsttätige Rückstellung des Betätigungselements eingerichtet und vorgesehen ist, wenn auf das Betätigungselement keine, zum Beispiel manuell oder fremdkraftbetätigt aufgebrachte, Verstellkraft zum Entriegeln der Schlosseinheit mehr wirkt, dient das mindestens eine Federelement des Kopplungsmechanismus der Bereitstellung einer Kraftkupplung und hierüber der Integration einer Leerhub- oder Überhubfunktion in die Schlosseinheit.

Grundsätzlich kann die vorgeschlagene Schlosseinheit für einen Fahrzeugsitz vorgesehen sein, beispielsweise um ein Lehnenteil, wie zum Beispiel eine Rückenlehne oder eine Durchlade, an einem Sitzuntergestell oder einer karosseriefesten Innenraumkomponente lösbar zu verriegeln oder um ein Sitzuntergestell lösbar mit einer an einem Fahrzeugboden fixierten Bodenbaugruppe lösbar zu verriegeln. Die vorgeschlagene Lösung betrifft somit insbesondere eine Schlosseinheit für ein Sitzverstellsystem.

Die vorgeschlagene Lösung betrifft dementsprechend auch einen Fahrzeugsitz mit einer Ausführungsvariante einer vorgeschlagenen Schlosseinheit.

Die vorgeschlagene Lösung kann aber auch für andere Anwendungen und Systeme, wie z.B. zum Verriegeln von Fahrzeugtüren oder -klappen zum Einsatz kommen.

Die beigefügten Figuren veranschaulichen exemplarisch mögliche Ausführungsvarianten der vorgeschlagenen Lösung.

### Hierbei zeigen:

- Figur 1: in Seitenansicht eine Ausführungsvariante einer vorgeschlagenen Schlosseinheit, die eine Leerhubfunktion mithilfe eines eine Kulissenführung aufweisenden Kopplungsmechanismus integriert;
- Figur 2: eine auf Basis der Konstruktion der Schlosseinheit der Figur 1 basierende Abwandlung der Schlosseinheit, bei der zum Entriegeln der Schlosseinheit das Betätigungselement in eine gegenüber der Variante der Figur 1 entgegengesetzte Betätigungsrichtung verstellbar ist;
- Figur 3A: in Seitenansicht eine weitere Ausführungsvariante einer vorgeschlagenen Schlosseinheit mit einem Kopplungsmechanismus, der über eine Kraftkupplung eine Leerhubfunktion in die Schlosseinheit integriert;
- Figur 3B: die Schlosseinheit der Figur 3A in perspektivischer Darstellung;
- Figur 4: ein Verstellkraft-Betätigungswinkel-Diagramm, unter Darstellung verschiedener Verläufe für eine aufzubringende Verstellkraft über einem Betätigungswinkel eines schwenkbaren Entriegelungshebels der Schlosseinheit zum Entriegeln der Schlosseinheit der Figuren 3A und 3B;
- Figur 5: in Seitenansicht einen Verriegelungsmechanismus für eine Schlosseinheit der Figuren 1 bis 3B.

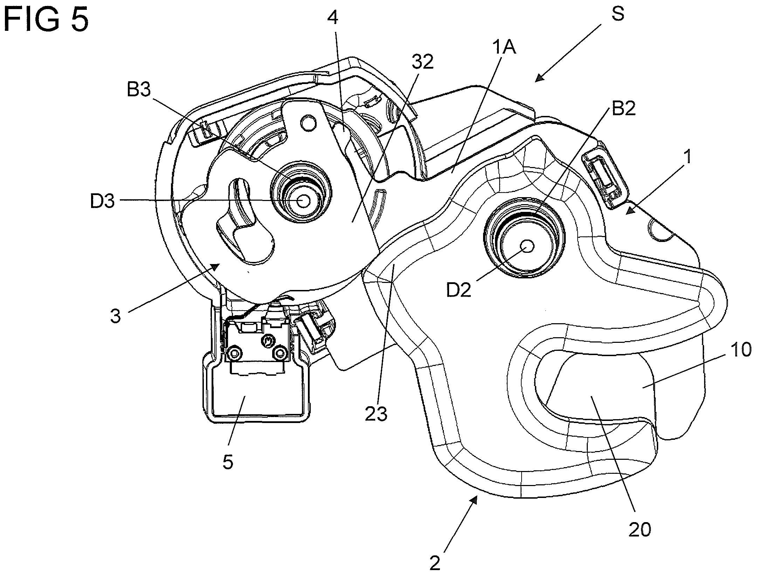

Die Figur 5 zeigt in Seitenansicht eine Schlosseinheit S mit einem Verriegelungsmechanismus, bei dem ein um eine Drehachse D2 schwenkbares Verriegelungselement in Form einer Drehfalle 2 an einem Träger in Form einer Grundplatte 1 gelagert ist. Die Drehfalle 2 ist zwischen einer in der Figur 5 dargestellten Verriegelungsposition und einer Freigabeposition um die Schwenkachse D2 schwenkbar. In der Verriegelungsposition ist die Drehfalle 2 dazu vorgesehen, ein Gegenelement, zum Beispiel einen Verriegelungsbolzen oder -bügel, der in eine Verriegelungsaufnahme 10 der Grundplatte 1 eingreift, formschlüssig in einem Drehfallenmaul 20 der Drehfalle 2 aufzunehmen und hierüber zum Beispiel crashsicher an der Grundplatte 1 zu verriegeln. Die dargestellte Schlosseinheit S kann hierbei beispielsweise zur Verriegelung an einem Fahrzeugsitz zum Einsatz kommen.

Um die Drehfalle 2 in der eingenommenen Verriegelungsposition gegen eine Verstellung in die Freigabeposition zu sichern, ist in an sich bekannter Weise ein Sperrelement in Form einer Sperrklinke 3 vorgesehen. Diese Sperrklinke 3 ist ebenfalls an der Grundplatte 1 schwenkbar gelagert. Eine Drehachse D3 für die schwenkbare Lagerung der Sperrklinke 3 verläuft hierbei parallel zu der Drehachse D2 der Drehfalle 2. Die Sperrklinke 3 ist um diese (zweite) Drehachse D3 zwischen einer Sperrposition entsprechend der Figur 5 und einer Entriegelungsposition schwenkbar. In der Verriegelungsposition liegt die Sperrklinke 3 über einen Sperrabschnitt 32 an einem Kontaktabschnitt 23 der Drehfalle 2 an, um die Drehfalle 2 gegen eine Verstellung aus der eingenommenen Verriegelungsposition zu sichern. Wird die Sperrklinke 3 in ihre Entriegelungsposition verschwenkt, gibt sie die Drehfalle 2 frei, sodass die Drehfalle 2 um ihre Drehachse D2 in ihre Freigabeposition schwenken kann, wodurch die Drehfalle 2 außer Eingriff mit dem in der Verriegelungsposition in dem Drehfallenmaul 20 aufgenommenen Gegenelement gebracht werden kann.

Zur Spielfreimachung in der Verriegelungsposition der Drehfalle 2 und/oder zur zusätzlichen Sicherung der Verriegelungsposition der Drehfalle 2, zum Beispiel im Fall (z.B. crashbedingt) außergewöhnlich hoher Belastungen auf die Schlosseinheit 1, ist um die Drehachse D3 der Sperrklinke 2 ein Zusatzsperrelement 4 schwenkbar gelagert. Dieses Zusatzsperrelement 4 wird bei einer Schwenkbewegung der Sperrklinke 3 in Richtung ihrer Entriegelungsposition mitgenommen und kann mit der Sperrklinke 3 zurück in eine die Verriegelungsposition der Drehfalle 2 spielfrei machende und/oder zusätzlich sichernde Schwenklage zurück verstellt werden.

Darüber hinaus integriert die Schlosseinheit 1 eine elektronische Detektionseinrichtung mit einem Mikroschalter 5. Der Mikroschalter 5 steht dabei in Wirkverbindung mit der Sperrklinke 3, um elektronisch zu detektieren, wenn die Sperrklinke 3 ihre Verriegelungsposition einnimmt und damit die Schlosseinheit S in einem verriegelnden Zustand vorliegt.

Die Drehfalle 2 und die Sperrklinke 3 sowie auch das Zusatzsperrelement 5 sind an einer Innenseite 1A der Grundplatte 1 vorgesehen. Von dieser Innenseite 1A der Grundplatte 1 stehen entlang der Drehachsen D2 und D3 jeweils Befestigungselemente in Form von Gewindebolzen B2, B3 vor, über die die Schlosseinheit 1 bestimmungsgemäß an einer zu verriegelnden Baugruppe festzulegen ist, zum Beispiel an einem Lehnenteil eines Fahrzeugsitzes.

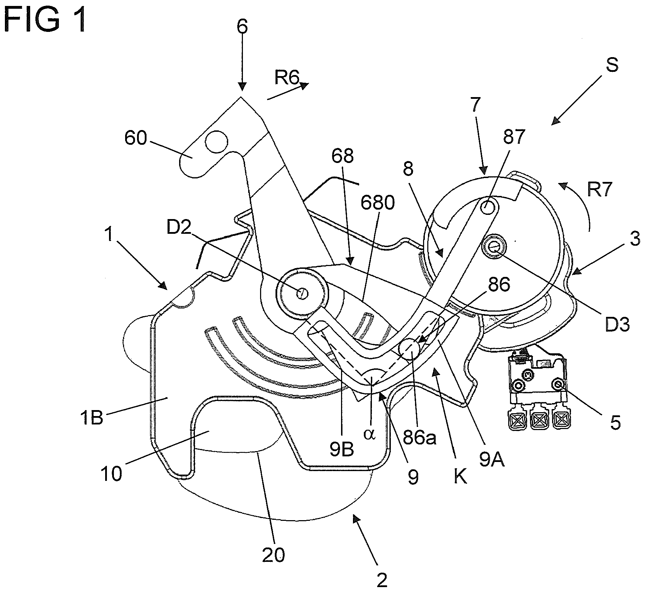

Die Figuren 1, 2 und 3A-3B zeigen Ausführungsvarianten der Schlosseinheit 1 der Figur 5 mit Blick auf eine der Innenseite 1A abgewandte Außenseite 1B der Grundplatte 1, an der ein Kopplungsmechanismus K vorgesehen ist. Über diesen Kopplungsmechanismus K kann eine an einem Betätigungselement, hier in Form eines Entriegelungshebels 6, aufgebrachte Betätigungs- oder Verstellkraft an die Sperrklinke 3 übertragen werden, um die Sperrklinke 3 gezielt in ihre Entriegelungsposition zu schwenken und damit ein Schwenken der Drehfalle 2 in ihre Freigabeposition und folglich ein Entriegeln der Schlosseinheit S zu gestatten. Der Entriegelungshebel 6 ist vorliegend beispielsweise zur manuellen oder fremdkraftbetätigten Betätigung vorgesehen. Hierfür ist der Entriegelungshebel 6 an der Drehachse D2 der Drehfalle 2 ebenfalls (unabhängig von der Drehfalle 2) schwenkbar gelagert und steht mit einem Betätigungsbereich 60 radial bezüglich der Drehachse D2 über einen Rand der Grundplatte 1 hinaus vor. Auf diese Art und Weise ist der Betätigungsbereich 60 beispielsweise auch von außerhalb eines Gehäuses der Schlosseinheit S (nicht dargestellt) zugänglich und manuell betätigbar oder mit einem Übertragungsglied für eine manuelle oder fremdkraftbetätigte, d.h. motorisch unterstützte, Betätigung des Entriegelungshebels 6 in einfacher Weise koppelbar.

In den Ausführungsvarianten der Figuren 1, 2 und 3A-3B ist der Entriegelungshebel 6 jeweils um die Drehachse D2 der Drehfalle 2 aus einer in den Figuren jeweils dargestellten Ausgangslage entlang einer Betätigungsrichtung R6 in Richtung einer zugelassenen Endlage schwenkbar, um bestimmungsgemäß eine Entriegelung der Schlosseinheit 1 zu verursachen. So ist der Entriegelungshebel 6 über den jeweiligen Kopplungsmechanismus derart mit der Sperrklinke 3 mechanisch gekoppelt, dass die Schwenkbewegung des Entriegelungshebels 6 entlang der Betätigungsrichtung R6 zu einer Schwenkbewegung der Sperrklinke 3 entlang einer Drehrichtung R7 um die Drehachse D3 in Richtung der Entriegelungsposition der Sperrklinke 3 führt. Der Kopplungsmechanismus K ist hierbei in allen Ausführungsvarianten der Figuren 1, 2 und 3A-3B jeweils derart ausgestaltet, dass eine Verstellbewegung des Entriegelungshebels 6 innerhalb des vorgegebenen Verstellbereichs (ausgehend von der Ausgangslage in eine Endlage) lediglich in einem Teilbereich dieses Verstellbereichs zu einer Schwenkbewegung der Sperrklinke 3 in Richtung seiner Entriegelungsposition führt. So integrieren die jeweiligen Schlosseinheiten S der Figuren 1, 2 und 3A-3B jeweils eine Leerhubfunktion, bei der der Entriegelungshebel 6 zum Lösen einer über die Schlosseinheit S bereitgestellten Verriegelung über zumindest einen Leerweg verstellbar ist, ohne eine Schwenkbewegung der Sperrklinke 3 zu verursachen.

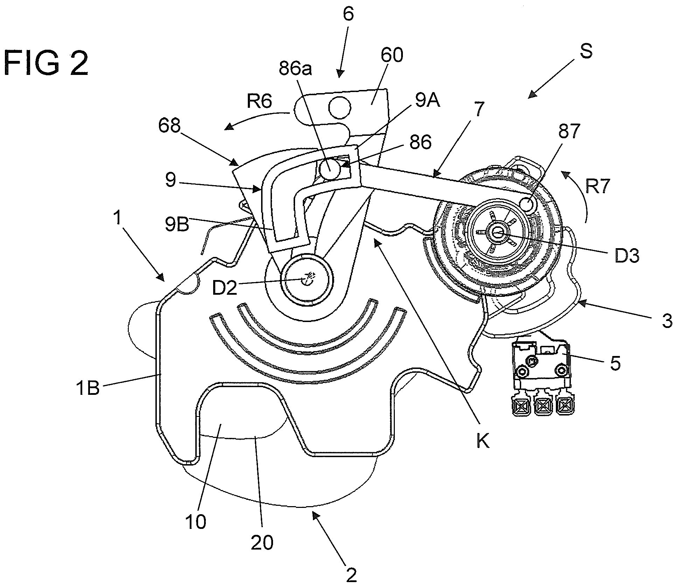

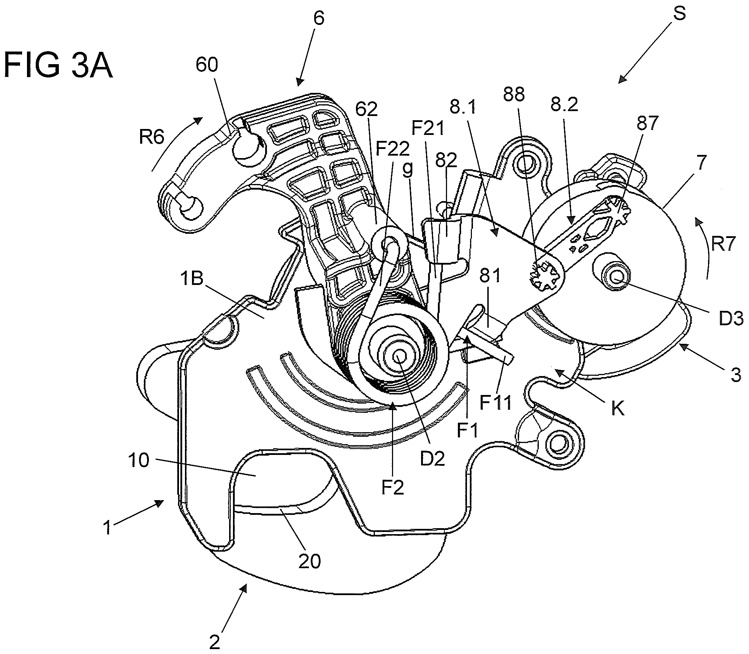

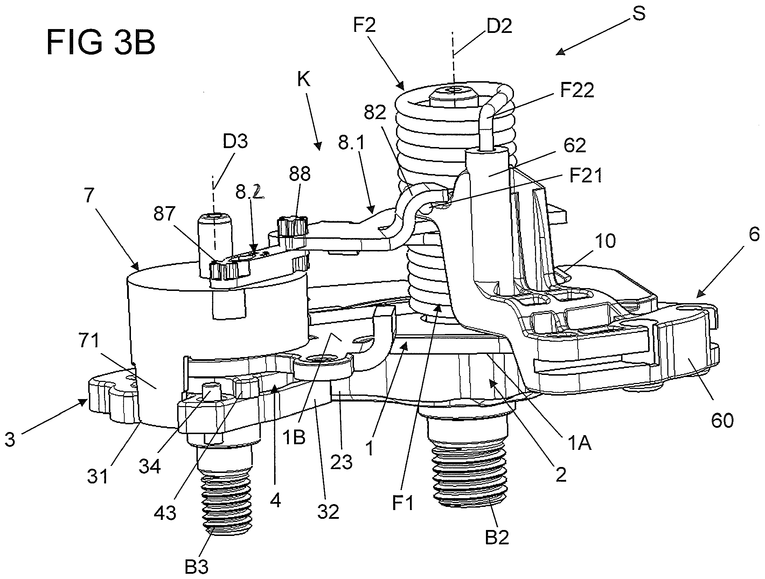

Zur Integration der Leerhubfunktion weisen die Ausführungsvariante der Figuren 1 und 2 jeweils eine Kulissenführung auf, während die Ausführungsvariante der Figuren 3A und 3B hierfür eine Kraftkupplung mithilfe einer als Schenkelfeder ausgebildeten Koppelfeder vorsieht.

Bei der Ausführungsvariante der Schlosseinheit S der Figur 1 weist der Kopplungsmechanismus K zwei Führungskulissen 680 und 9 auf, um eine Verstellbewegung des Entriegelungshebels 6 entlang der Betätigungsrichtung R6 mit einer variablen Übersetzung an die Sperrklinke 3 zu übertragen. Eine Führungskulisse 680 ist hierbei in einem mit dem Entriegelungshebel 6 drehfest verbunden Kulissenabschnitt 68 ausgebildet. Die andere Führungskulisse 9 ist demgegenüber bezüglich der Grundplatte 1 unbeweglich und damit trägerfest ausgebildet. Die unbewegliche Führungskulisse 9 kann beispielsweise an einem der Außenseite 1B der Grundplatte 1 gegenüberliegenden Gehäuseteil der Schlosseinheit S vorgesehen sein.

In beide Führungskulissen 680 und 9 greift ein Führungselement in Form eines Führungszapfens 86a ein, der an einem Stangenende 86 eines Mitnehmerkoppelglieds in Form einer Koppelstange 8 vorgesehen ist. An seinem anderen Stangenende 87 ist die Koppelstange 8 exzentrisch zu der Drehachse D3 an einem Mitnehmer 7 angelenkt, der um die Drehachse D3 der Sperrklinke 3 drehbar an der Grundplatte 1 gelagert ist. Der Mitnehmer 7 greift hierbei mit einem axial bezüglich der Drehachse D3 vorstehenden Mitnehmersteg 71 (vergleiche Figur 3B) in eine durch eine Aussparung 31 ausgebildete Schnittstelle der Sperrklinke 3 an der gegenüberliegenden Innenseite 1A der Grundplatte 1 formschlüssig ein. Indem der an der Außenseite 1B der Grundplatte 1 drehbar gelagerte Mitnehmer 7 formschlüssig mit der auf der Innenseite 1A der Grundplatte 1 schwenkbar gelagerten Sperrklinke 3 in Eingriff steht, nimmt der Mitnehmer 7 bei einer Drehung um die Drehachse D3 die Sperrklinke 3 mit. Über den Kopplungsrealismus K kann damit eine Schwenkbewegung des Entriegelungshebels 6 entlang der Betätigungsrichtung R6 (in der Figur 1 im Uhrzeigersinn) in eine Drehbewegung des Mitnehmers 7 in eine entgegengesetzte Drehrichtung R7 (entgegen dem Uhrzeigersinn) umgesetzt werden, die wiederum die Sperrklinke 3 aus ihrer Sperrposition in die Entriegelungsposition schwenkt.

Über den doppelt kulissengeführten Führungszapfen 86a, über den eine Schwenkbewegung des Entriegelungshebels 6 in eine Drehbewegung des Mitnehmers 7 umsetzbar ist, sowie die Anordnung und Gestaltung der Führungskulissen 680 und 9 ist erreicht, dass die Schwenkbewegung des Entriegelungshebels 6 aus seiner Ausgangslage der Figur 1 entlang der Betätigungsrichtung R6 zumindest in einem Teilbereich zu keiner Schwenkbewegung der Sperrklinke 3 führt. In zumindest einem Teilbereich resultiert aus einer Schwenkbewegung des Entriegelungshebels 6 folglich keine Schwenkbewegung der Sperrklinke 3 oder ein überbrückter Schwenkwinkel der Sperrklinke 3 ist wenigstens um ein Vielfaches kleiner als ein Betätigungswinkel des Entriegelungshebels 6. Über die Kulissenführung des Kopplungsmechanismus K ist somit in die Schlosseinheit S eine Leerhubfunktion integriert.

Im vorliegenden Fall ist der koppelstangenseitige Führungszapfen 86a in der mit dem Entriegelungshebel 6 schwenkbaren Führungskulisse 680 verschieblich aufgenommen, die sich bezogen auf die Drehachse D2 des Entriegelungshebels 6 insbesondere radial in dem Kulissenabschnitt 68 erstreckt. Die Geometrie der beweglichen Führungskulisse 680 ist hierbei derart gewählt, dass in einem endlagennahen Teilbereich des für den Entriegelungshebel 6 zugelassenen Verstellbereichs der Führungszapfen 86a an einem sich in Richtung der Drehachse D2 aufweitenden Kulissenabschnitt der beweglichen Führungskulisse 680 vorliegt. In diesem sich aufweitenden Kulissenabschnitt der beweglichen Führungskulisse 680 wird der Führungszapfen 86a bei einem Schwenken des Entriegelungshebels 6 nicht mehr durch die Führungskulisse 680 derart mitgenommen, dass die Koppelstange 8 eine Verlagerung um die Drehachse D3 des Mitnehmers 7 erfährt, wenn der Entriegelungshebel 6 um eine vorgegebenes Maß aus seiner Ausgangslage verstellt wurde. Vielmehr wird dann die Koppelstange 8 der Verstellbewegung der Führungskulisse 680 allein durch Schwenken um das an dem Mitnehmer 7 angelenkte Stangenende 87 folgen. In dem entsprechenden Teilbereich des zugelassen Verstellbereichs für den Entriegelungshebel 6 ist somit mit einer (weiteren) Schwenkbewegung des Entriegelungshebels 6 keine Drehbewegung auf den Mitnehmer 7 verbunden.

Über die zusätzliche unbewegliche Führungskulisse 9 ist ferner das Übersetzungsverhältnis zwischen einem von dem Entriegelungshebel 6 überbrückten Betätigungswinkel zu einem Drehwinkel des Mitnehmers 7 vorgegeben und über den Verstellbereich des Entriegelungshebels 6 variiert. So weist die unbewegliche Führungskulisse 9 zwei Kulissenabschnitte 9A und 9B auf, die vorliegend eine L-förmige Führungsbahn für den Führungszapfen 86a in der Führungskulisse 9 definieren. Die beiden Kulissenabschnitte 9A und 9B definieren demzufolge zwei Abschnitte einer durchgehenden Führungsbahn für den Führungszapfen 86a, die unter einem Winkel α, vorliegend mit α im Bereich zwischen 80° und 110°, zueinander orientiert sind.

Ausgehend von dem einen Kulissenabschnitt 9A, in dem der Führungszapfen 86a in der Ausgangslage des Entriegelungshebels 6 vorliegt, ändert sich somit ein Verlauf der Führungsbahn in dem zweiten Kulissenabschnitt 9B, in dem der Führungszapfen 86a in Richtung einer Endlage des Entriegelungshebels 6 vorliegt. Der zweite Kulissenabschnitt 9B verläuft vorliegend zumindest mit einer Richtungskomponente auf die Drehachse D2 des Entriegelungshebels 6 zu, während sich der erste Kulissenabschnitt 9A zumindest annähernd entlang eines Kreisbahnabschnitt um die ersten Drehachse D2 erstreckt. Damit ist in dem ersten Kulissenabschnitt 9A eine kontinuierliche Übersetzung zwischen der Schwenkbewegung des Entriegelungshebels 6 und einer Schwenkbewegung des Mitnehmers 7 und damit der Sperrklinke 3 vorgesehen, während das Übersetzungsverhältnis über den zweiten Kulissenabschnitt 9B diskontinuierlich bis hin zu einem unendlich kleinen Übersetzungsverhältnis ausgeführt ist. Genauer gesagt verläuft vorliegend der zweite Kulissenabschnitt 9B zumindest annähernd entlang eines Abschnitts einer Kreisbahn um die Drehachse des Stangenendes 87 an dem Mitnehmer 7, wenn ein Ende einer Verstellbewegung der Sperrklinke 3 erreicht ist. Hierdurch lässt sich eine Übersetzung ins unendliche Kleine erzielen.

Bei der auf dem Ausführungsbeispiel der Figur 1 basierenden Variante einer Schlosseinheit S der Figur 2 ist der Kopplungsmechanismus K konstruktiv identisch mit einer Kulissenführung ausgestaltet. Im Unterschied zu der Ausführungsvariante der Figur 1 ist jedoch insbesondere die Ausgangslage des Entriegelungshebels 6 abweichend gewählt, sodass der Entriegelungshebel 6 in eine entgegengesetzte Betätigungsrichtung R6 (entgegen dem Uhrzeigersinn) in eine Endlage geschwenkt werden muss, um eine Schwenkbewegung der Sperrklinke 3 in die Drehrichtung R7 und damit in Richtung ihrer Entriegelungsposition auszulösen. Hierfür sind lediglich der drehfest mit dem Entriegelungshebel 6 zu arretierende Kulissenabschnitt 68 mit der beweglichen Führungskulisse 680 gegenüber dem Ausführungsbeispiel der Figur 1 um die Drehachse D2 gedreht und die unbewegliche, trägerfeste Führungskulisse 9 gespiegelt vorgesehen.

Mit dem kulissenbasierten Kopplungsmechanismus K ist folglich die Schlosseinheit S ohne konstruktive Änderungen an den Komponenten des Verriegelungsmechanismus der Schlosseinheit S hinsichtlich der für die Entriegelung der Schlosseinheit S umzusetzenden Betätigungsrichtung des Entriegelungshebels 6, dem zu realisierenden Betätigungsweg sowie der aufzubringenden Betätigungskraft und einem über den Kopplungsmechanismus K umzusetzenden Bewegungsablauf variabel anpassbar. So muss vorliegend beispielsweise lediglich der Kopplungsmechanismus K mit dem in einer anderen Ausgangslage vorzusehenden Entriegelungshebel 6 und in abweichenden Relativlagen zueinander angeordneten Komponenten vorgesehen und über den Mitnehmer 7 mit der Sperrklinke 3 verbunden werden, um unterschiedliche Typen von Schlosseinheiten S bereitzustellen

Bei der Ausführungsvariante der Figuren 3A und 3B ist der Kopplungsmechanismus K ohne Kulissenführung ausgeführt. Hier ist für die Integration eines Leerhubs in die Schlosseinheit S eine Kraftkupplung vorgesehen. Für diese Kraftkupplung weist der Kopplungsmechanismus K insbesondere eine Koppelfeder F2 auf, die hier als Schenkelfeder ausgeführt ist.

Die Koppelfeder F2 stützt sich dabei mit einem ersten Federschenkel F21 an einem laschenförmigen Stützabschnitt 83 eines als erstem Koppelhebel 8.1 ausgeführten Betätigerkoppelglieds des Kopplungsmechanismus K ab und andererseits über einen anderen Federschenkel F22 an dem Entriegelungshebel 6. Für die Abstützung an dem Entriegelungshebel 6 ist der eine Federschenkel F22 in einen Federverbindungsabschnitt in Form einer Steckhülse 62 des Entriegelungshebels 6 eingesteckt. Über die Koppelfeder F2 sind folglich der Entriegelungshebel 6 und der erste Koppelhebel 8.1 gegeneinander vorgespannt. In der Ausgangslage des Entriegelungshebels 6 sind dabei der Entriegelungshebel 6 und der erste Koppelhebel 8.1 um einen Leerweg g respektive Spalt zueinander beabstandet, sodass eine auf den Entriegelungshebel 6 aufgebrachte Verstellkraft zum Schwenken des Entriegelungshebels 6 um die Drehachse D2 zunächst über die Koppelfeder F2 an den ersten Koppelhebel 8.1 übertragbar ist.

Der erste Koppelhebel 8.1 ist ferner mit einem Mitnehmerkoppelglied in Form eines zweiten Koppelhebels 8.2 des Kopplungsmechanismus K gelenkig verbunden. Hierbei stehen der erste und der zweite Koppelhebel 8.1, 8.2 über ein Verbindungsgelenk 88 in Verbindung. Der zweite Koppelhebel 8.2 ist ferner analog zu der Koppelstange 8 der Ausführungsvariante der Figuren 1 und 2 an einem Stangenende 87 exzentrisch an dem Mitnehmer 7 angelenkt.

Zusätzlich zu der Koppelfeder F2 weist die Schlosseinheit S eine Rückstellfeder F1 auf. Diese Rückstellfeder F1 ist ebenfalls als Schenkelfeder ausgeführt. Die Rückstellfeder stützt sich dabei mit einem Federschenkel F11 ebenfalls an dem ersten Koppelhebel 8.1, hier an einem weiteren laschenartig ausgebildeten Stützabschnitt 81, sowie andererseits an einem grundplattenfesten Abschnitt ab, um den ersten Koppelhebel 8.1 gegen die Grundplatte 1 vorzuspannen und damit den Entriegelungshebel 6 in seine Ausgangslage vorzuspannen. Auf diese Art und Weise wird der Entriegelungshebel 6 mithilfe der Rückstellfeder F1 selbsttätig in seine Ausgangslage zurück verstellt, wenn keine Verstellkraft mehr an dem Entriegelungshebel 6 angreift. Wicklungen der Schenkelfedern der Rückstellfeder F1 und der Koppelfeder F2 erstrecken sich vorliegend um einen sich entlang der Drehachse D2 der Drehfalle 2 erstreckenden und an der Außenseite 1B der Grundplatte 1 vorstehenden Lagerzapfen.

Wird der Entriegelungshebel 6 entlang der Betätigungsrichtung R6 geschwenkt, um die Schlosseinheit S zu entriegeln, ist für die Schwenkbewegung zunächst eine Betätigungskraft aufzubringen, der eine Rückstellkraft der Rückstellfeder F1 entgegen wirkt. Über die Koppelhebel 8.1 und 8.2 des Kopplungsmechanismus K wird dabei die Schwenkbewegung des Entriegelungshebels 6 und damit die an dem Entriegelungshebel 6 aufgebrachte Verstellkraft an den Mitnehmer 7 und hierüber an die Sperrklinke 3 übertragen, um die Sperrklinke 3 in Richtung ihrer Entriegelungsposition zu verstellen. Schlägt die Sperrklinke 3 über einen Mitnehmerzapfen 34 an einem Anschlag 43 des Zusatzsperrelements 4 an, wird von der Sperrklinke 3 auch das Zusatzsperrelement 4 mitgenommen.

Während dieser initialen Schwenkbewegung des Entriegelungshebels 6 drückt die Koppelfeder F2 beide Koppelhebel 8.1, 8.2 auseinander. Erst wenn der erste Koppelhebel 8.1 gegen einen Anschlag innerhalb der Schlosseinheit S verstellt wird, wird die Koppelfeder F2 gespannt. Die hierfür seitens des Entriegelungshebels 6 aufzubringende Betätigungskraft kann hierbei zu einer Verstellbewegung des Entriegelungshebels 6 relativ zu dem ersten Koppelhebel 8.1 führen, ohne dass hiermit eine Schwenkbewegung der Sperrklinke 3 verbunden wäre. So ist eine Überbrückung eines Spaltes und damit eines damit korrespondierenden Leerwegs g am Ende der Betätigung zwischen einem Abschnitt des Entriegelungshebels 6 und einem Abschnitt des ersten Koppelhebels 8.1 und ein damit verbundenes Spannen der Koppelfeder F2 ermöglicht, wenn der erste Koppelhebel 8.1 gegen einen Anschlag innerhalb des Kopplungsmechanismus K gedrückt wird.

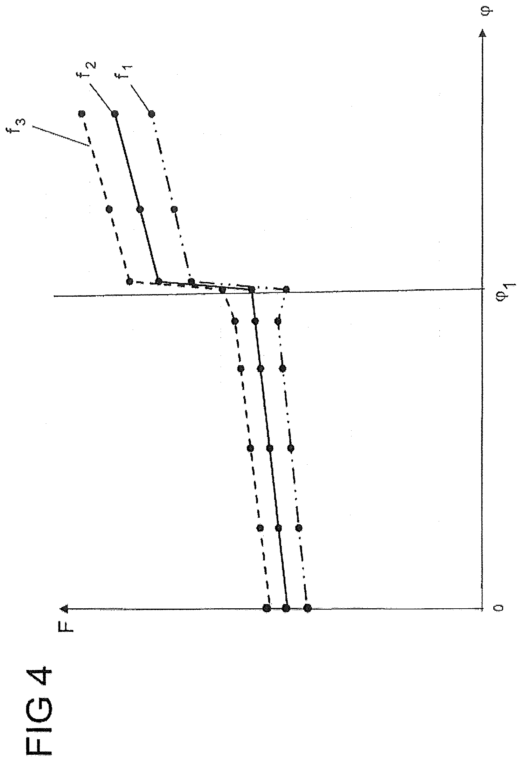

Das Diagramm der Figur 4 veranschaulicht in diesem Zusammenhang die an dem Entriegelungshebel 6 aufzubringende Betätigungskraft F über einen Betätigungswinkel ϕ des Entriegelungshebels 6, den dieser aus seiner Ausgangslage um die Drehachse D2 zurücklegt. Hierbei sind in der Figur 4 drei unterschiedliche Kraftverläufe f₁, f₂ und f₃ über den Betätigungswinkel ϕ aufgetragen. Bei dem Kraftverlauf f₁ handelt es sich um die mindestens an dem Entriegelungshebel 6 aufzubringende Betätigungskraft, während der Kraftverlauf f₃ die maximal mögliche Betätigungskraft widerspiegelt. Der Kraftverlauf f₂ stellt dementsprechend die nominell aufzubringende Betätigungskraft für das Entriegeln der Schlosseinheit S über den Betätigungswinkel ϕ dar.

Unabhängig vom Kraftverlauf f₁, f₂, f₃ ist anhand der Darstellung der Figur 4 ersichtlich, dass die aufzubringende Betätigungskraft in einem ersten Winkelbereich bis zu einem Umschaltwinkel ϕ₁ vor allem die Kraft der Rückstellfeder F1 überwunden werden muss. Erst ab dem Umschaltwinkel ϕ₁ ist die aufzubringende Betätigungskraft deutlich höher und muss die Rückstellkraft der Koppelfeder F2 überwinden. Eine vorgegebene Mindestfederkraft der Koppelfeder F2 liegt dabei immer über der maximal möglichen Federkraft einer Schließfeder des Verriegelungsmechanismus, um zunächst eine Bewegung der Sperrelemente 3, 4 zu erzeugen. Über die mit der Koppelfeder F2 in die Schlosseinheit S integrierte Leerhubfunktion muss folglich von dem Entriegelungshebel 6 in einem zugelassenen Verstellbereich wenigstens einmal ein Leerweg g gegen die von der Koppelfeder F2 aufgebrachte Vorspannkraft überbrückt werden, vorliegend an einem Ende der zur Entriegelung notwendigen Betätigung.

Unabhängig von der Ausgestaltung des Kopplungsmechanismus K ist über die vorgeschlagene Integration einer Leerhubfunktion in eine Schlosseinheit S, in diesem Beispiel vormontiert als Verriegelungsschloss für einen Fahrzeugsitz, eine flexible Nutzung, insbesondere in Kombination mit einer weiteren Schlosseinheit ermöglicht. So kann, insbesondere bei einem manuell zu betätigenden Schloss, eine Veränderung einer Betätigungsbewegung des Entriegelungshebels 6 unabhängig von einer Sperrklinke 3 realisiert werden. Zudem ist ohne weiteres eine variable Übersetzung integrierbar, um verschiedene Betätigungswege, Betätigungsrichtungen, Bewegungsabläufe und Bewegungskraftverläufe zu realisieren. Mit unveränderter Gestaltung eines die Drehfalle 2 und Sperrklinke 3 umfassenden Verriegelungsmechanismus können somit verschiedene Öffnungsrichtungen, verschiedene Öffnungswege und verschiedene Betätigungsarten oder verschiedene Kraftverläufe in die Schlosseinheit S integriert werden. Ferner können beispielsweise bei zwei Schlosseinheiten, die mechanisch miteinander gekoppelt sind und von einem gemeinsamen Betätigungselement betätigbar sind, ohne weiteres ein Toleranzausgleich und eine zeitlich abgestaffelte Betätigung realisiert werden. So kann sich beispielsweise eine Schlosseinheit S noch im Leerhub bewegen, während die andere Schlosseinheit noch betätigt wird.

### Bezugszeichenliste

- 1: Grundplatte (Träger)
- 10: Verriegelungsaufnahme
- 1A: Innenseite
- 1B: Außenseite
- 2: Drehfalle (Verriegelungselement)
- 20: Drehfallenmaul
- 23: Kontaktabschnitt
- 3: Sperrklinke (Sperrelement)
- 31: Aussparung (Schnittstelle)
- 32: Sperrabschnitt
- 34: Mitnehmerzapfen
- 4: Zusatzsperrelement
- 43: Anschlag
- 5: Mikroschalter (Detektionseinrichtung)
- 6: Entriegelungshebel (Betätigungselement)
- 60: Betätigungsbereich
- 62: Steckhülse (Federverbindungsabschnitt)
- 68: Kulissenabschnitt
- 680: Führungskulisse
- 7: Mitnehmer (Mitnehmerelement)
- 71: Mitnehmersteg (Mitnehmerabschnitt)
- 8: Koppelstange (Mitnehmerkoppelglied)
- 8.1: Koppelhebel (Betätigerkoppelglied)
- 8.2: Koppelhebel (Mitnehmerkoppelglied)
- 81, 82: Stützabschnitt
- 86: Stangenende
- 86a: Führungszapfen (Führungselement)
- 87: Stangenende
- 88: Verbindungsgelenk
- 9: Führungskulisse
- 9A, 9B: Kulissenabschnitt
- B2, B3: Gewindebolzen (Befestigungselement)
- D2, D3: Drehachse
- F: Kraft
- F1: Rückstellfeder
- F11: Federschenkel
- F2: Koppelfeder
- F21, F22: Federschenkel
- g: Leerweg / Spalt
- K: Kopplungsmechanismus
- R6: Betätigungsrichtung
- R7: Drehrichtung
- S: Schlosseinheit
- α: Winkel
- ϕ: Betätigungswinkel

## Patentansprüche

1. Schlosseinheit für ein Fahrzeug, mit
- einem Träger (1),
- einem an dem Träger (1) zwischen einer Verriegelungsposition und einer Freigabeposition schwenkbaren Verriegelungselement (2),
- einem an dem Träger (1) zwischen einer Sperrposition und einer Entriegelungsposition schwenkbaren Sperrelement (3), das in seiner Sperrposition das in der Verriegelungsposition vorliegende Verriegelungselement (2) gegen eine Verstellung in die Freigabeposition sperrt und in seiner Entriegelungsposition eine Verstellung des Verriegelungselements (2) aus der Verriegelungsposition in seine Freigabeposition gestattet, und
- einem an dem Träger (1) innerhalb eines Verstellbereichs verstellbaren Betätigungselement (6) zum Schwenken des Sperrelements (3) aus der Sperrposition in Richtung der Entriegelungsposition,
wobei das Betätigungselement (6) über einen Kopplungsmechanismus (K) mit dem Sperrelement (3) gekoppelt ist, über den eine Verstellbewegung des Betätigungselements (6) lediglich in einem Teilbereich des Verstellbereichs des Betätigungselements (6) in eine Schwenkbewegung des Sperrelements (3) in Richtung seiner Entriegelungsposition umsetzbar ist,
**dadurch gekennzeichnet,**
**dass** der Kopplungsmechanismus (K) mindestens eine Kulissenführung für die Umsetzung einer Verstellbewegung des Betätigungselements (6) in eine Schwenkbewegung des Sperrelements (3) umfasst, wobei die mindestens eine Kulissenführung eine gegenüber dem Träger (1) unbewegliche Führungskulisse (9) umfasst, relativ zu der das Betätigungselement (6) verstellbar ist,
oder
**dass** der Kopplungsmechanismus (K) mindestens ein eine Vorspannkraft aufbringendes Federelement (F2) umfasst, gegen dessen Vorspannkraft das Betätigungselement (6) innerhalb seines Verstellbereichs einmal zur Überbrückung eines Leerwegs verstellbar ist, wobei durch das mindestens eine Federelement (F2) das Betätigungselement (6) gegenüber einem verstellbaren Betätigerkoppelglied (8.1) des Kopplungsmechanismus (K) vorgespannt ist, wobei das Betätigerkoppelglied (8.1) während einer Verstellung des Betätigungselements (6) in dem einen Teilbereich des Verstellbereichs, in dem aus der Verstellung des Betätigungselements (6) eine Schwenkbewegung des Sperrelements (3) resultiert, zusammen mit dem Betätigungselement (6) verstellbar ist, indem eine an dem Betätigungselement (6) aufgebrachte Verstellkraft über das mindestens eine Federelement (F2) an das Betätigerkoppelglied (8.1) übertragbar ist, und in dem anderen Teilbereich, in dem der Leerweg zu überbrücken ist, das Betätigungselement (6) gegen die von dem mindestens einen Federelement (F2) aufgebrachte Vorspannkraft relativ zu dem Betätigerkoppelglied (8.1) verstellbar ist.

2. Schlosseinheit nach Anspruch 1, **dadurch gekennzeichnet, dass** über den Kopplungsmechanismus (K) eine Leerhubfunktion in die Schlosseinheit (S) integriert ist, bei der das Betätigungselement (6) zum Lösen einer über die Schlosseinheit (S) bereitgestellten Verriegelung über zumindest einen Leerweg seines Verstellbereichs verstellbar ist, ohne eine Schwenkbewegung des Sperrelements (3) zu verursachen.

3. Schlosseinheit nach Anspruch 2, **dadurch gekennzeichnet, dass** der Leerweg, bezogen auf eine Ausgangslage des Betätigungselements (6), aus der das Betätigungselement (6) innerhalb des Verstellbereichs in eine Endlage verstellbar ist, um das Sperrelement (3) aus seiner Sperrposition in Richtung einer Entriegelungsposition zu verstellen,
- am Anfang des Verstellbereichs,
- in der Mitte des Verstellbereichs,
- am Ende des Verstellbereichs oder
- am Anfang und am Ende des Verstellbereichs
vorgesehen ist.

4. Schlosseinheit nach einem der Ansprüche 1 bis 3, **dadurch gekennzeichnet, dass** das Betätigungselement (6) schwenkbar und/oder am Träger (1) gelagert ist.

5. Schlosseinheit nach einem der vorhergehenden Ansprüche, **dadurch gekennzeichnet, dass** der Kopplungsmechanismus (K) ein koaxial zu einer Drehachse (D3) des Sperrelements (3) drehbar gelagertes Mitnehmerelement (7) umfasst, das mit dem Sperrelement (3) formschlüssig in Eingriff steht.

6. Schlosseinheit nach Anspruch 5, **dadurch gekennzeichnet, dass** an dem Mitnehmerelement (7) für den formschlüssigen Eingriff mit dem Sperrelement (3) mindestens ein Mitnehmerabschnitt (71) vorgesehen ist, der, bezogen auf die Drehachse (7) des Sperrelements (3), axial vorsteht.

7. Schlosseinheit nach Anspruch 5 oder 6, **dadurch gekennzeichnet, dass** der Kopplungsmechanismus (K) mindestens ein Mitnehmerkoppelglied (8, 8.2) umfasst, das, bezogen auf die Drehachse (D3) des Sperrelements (3), exzentrisch an dem Mitnehmerelement (7) angelenkt ist.

8. Schlosseinheit nach einem der vorhergehenden Ansprüche, **dadurch gekennzeichnet, dass**, sofern der Kopplungsmechanismus (K) mindestens eine Kulissenführung umfasst, die mindestens eine Kulissenführung eine mit dem Betätigungselement (6) verstellbare Führungskulisse (680) umfasst.

9. Schlosseinheit nach einem der vorhergehenden Ansprüche, **dadurch gekennzeichnet, dass**, sofern der Kopplungsmechanismus (K) mindestens eine Kulissenführung umfasst, die gegenüber dem Träger (1) unbewegliche Führungskulisse (9) zwei Kulissenabschnitte (9A, 9B) aufweist, die sich hinsichtlich eines hiermit umgesetzten Übersetzungsverhältnisses zwischen einer Verstellbewegung des Betätigungselements (6) und einer resultierenden Schwenkbewegung des Sperrelements (3) voneinander unterscheiden.

10. Schlosseinheit nach Anspruch 9, **dadurch gekennzeichnet, dass** die zwei Kulissenabschnitte (9A, 9B) zwei Abschnitte einer Führungsbahn für ein an der Führungskulisse (9) entlang zu führendes Führungselement (86a) der mindestens einen Kulissenführung definieren, die unter einem Winkel (α) im Bereich von 70° bis 160° zueinander orientiert sind.

11. Schlosseinheit nach Anspruch 7 oder nach Anspruch 7 und einem der Ansprüche 8 bis 10, **dadurch gekennzeichnet, dass**, sofern der Kopplungsmechanismus (K) mindestens eine Kulissenführung umfasst, an dem Mitnehmerkoppelglied (8) ein Führungselement (86a) der mindestens einen Kulissenführung vorgesehen ist, das an einer Führungskulisse (680, 9) verschieblich gehalten ist.

12. Schlosseinheit nach den Ansprüchen 8 und 11, **dadurch gekennzeichnet, dass** das Führungselement (86a) des Mitnehmerkoppelglieds (8) sowohl an der verstellbaren Führungskulisse (680) als auch an der gegenüber dem Träger (1) unbeweglichen Führungskulisse (9) verschieblich gehalten ist und sich die Führungskulissen (680, 9) zumindest teilweise überdecken.

13. Schlosseinheit nach einem der Ansprüche 1 bis 7, **dadurch gekennzeichnet, dass**, sofern der Kopplungsmechanismus (K) mindestens ein eine Vorspannkraft aufbringendes Federelement (F2) umfasst, der Beginn des Leerwegs, bezogen auf eine Verstellbewegung des Betätigungselements (6) zum Schwenken des Sperrelements (3) in seine Entriegelungsposition durch einen mechanischen Anschlag definiert ist, an dem das Betätigerkoppelglied (8.1) am Ende des einen Teilbereichs anschlägt.

14. Schlosseinheit nach einem der Ansprüche 1 bis 7 oder 13, **dadurch gekennzeichnet, dass**, sofern der Kopplungsmechanismus (K) mindestens ein eine Vorspannkraft aufbringendes Federelement (F2) umfasst, das Federelement (F2) des Kopplungsmechanismus (K) zusätzlich zu mindestens einer Rückstellfeder (F1) vorgesehen ist, die das Betätigungselement (6) in Richtung einer Ausgangslage vorspannt, aus der das Betätigungselement (6) für ein Schwenken des Sperrelements (3) in seine Entriegelungsposition in Richtung einer Endlage zu verstellen ist.

15. Fahrzeugsitz mit einer Schlosseinheit (S) nach einem der vorhergehenden Ansprüche.

## Claims

1. A lock unit for a vehicle, comprising
- a carrier (1),
- a locking element (2) pivotable on the carrier (1) between a locking position and a release position,
- an arresting element (3) pivotable on the carrier (1) between an arresting position and an unlocking position, which in its arresting position arrests the locking element (2) present in the locking position against an adjustment into the release position and in its unlocking position permits an adjustment of the locking element (2) from the locking position into its release position, and
- an actuating element (6) adjustable on the carrier (1) within an adjustment range for pivoting the arresting element (3) from the arresting position in the direction of the unlocking position,
wherein the actuating element (6) is coupled to the arresting element (3) via a coupling mechanism (K), via which an adjusting movement of the actuating element (6) can be converted into a pivotal movement of the arresting element (3) in the direction of its unlocking position merely in a sub-section of the adjustment range of the actuating element (6),
**characterized in that**
the coupling mechanism (K) comprises at least one slotted link guide for converting an adjusting movement of the actuating element (6) into a pivotal movement of the arresting element (3), wherein the at least one slotted link guide comprises a guide link (9) immovable with respect to the carrier (1), relative to which the actuating element (6) can be adjusted,
or
the coupling mechanism (K) comprises at least one spring element (F2) applying a pretensioning force, against whose pretensioning force the actuating element (6) can be adjusted once within its adjustment range for bridging an idle path, wherein the actuating element (6) is pretensioned by the at least one spring element (F2) with respect to an adjustable actuator coupling member (8.1) of the coupling mechanism (K), wherein during an adjustment of the actuating element (6) in the one sub-section of the adjustment range, in which the adjustment of the actuating element (6) results in a pivotal movement of the arresting element (3), the actuator coupling member (8.1) can be adjusted together with the actuating element (6) **in that** an adjusting force applied on the actuating element (6) can be transmitted to the actuator coupling member (8.1) via the at least one spring element (F2), and in the other sub-section, in which the idle path is to be bridged, the actuating element (6) can be adjusted relative to the actuator coupling member (8.1) against the pretensioning force applied by the at least one spring element (F2).

2. The lock unit according to claim 1, **characterized in that** via the coupling mechanism (K) an idle stroke function is integrated into the lock unit (S), in which the actuating element (6) can be adjusted over at least an idle path of its adjustment range for releasing a locking provided via the lock unit (S), without causing a pivotal movement of the arresting element (3).

3. The lock unit according to claim 2, **characterized in that** based on a starting position of the actuating element (6), from which the actuating element (6) can be adjusted into an end position within the adjustment range in order to adjust the arresting element (3) from its arresting position in the direction of an unlocking position, the idle path is provided
- at the beginning of the adjustment range,
- in the middle of the adjustment range,
- at the end of the adjustment range, or
- at the beginning and at the end of the adjustment range.

4. The lock unit according to any of claims 1 to 3, **characterized in that** the actuating element (6) is pivotable and/or mounted on the carrier (1).

5. The lock unit according to any of the preceding claims, **characterized in that** the coupling mechanism (K) comprises a driver element (7) rotatably mounted coaxially to the axis of rotation (D3) of the arresting element (3), which is positively engaged with the arresting element (3).

6. The lock unit according to claim 5, **characterized in that** for the positive engagement with the arresting element (3) at least one driver portion (71) is provided on the driver element (7), which axially protrudes with respect to the axis of rotation (D3) of the arresting element (3).

7. The lock unit according to claim 5 or 6, **characterized in that** the coupling mechanism (K) comprises at least one driver coupling member (8, 8.2) which, with respect to the axis of rotation (D3) of the arresting element (3), is eccentrically articulated to the driver element (7).

8. The lock unit according to any of the preceding claims, **characterized in that**, if the coupling mechanism (K) comprises at least one slotted link guide, the at least one slotted link guide comprises a guide link (680) adjustable by means of the actuating element (6).

9. The lock unit according to any of the preceding claims, **characterized in that**, if the coupling mechanism (K) comprises at least one slotted link guide, the guide link (9) immovable with respect to the carrier (1) includes two slotted link portions (9A, 9b) which differ from each other with regard to a gear ratio realized thereby between an adjusting movement of the actuating element (6) and a resulting pivotal movement of the arresting element (3).

10. The lock unit according to claim 9, **characterized in that** the two slotted link portions (9A, 9B) define two portions of a guideway for a guide element (86a) of the at least one slotted link guide to be guided along the guide link (9), which are oriented at an angle (α) in the range of 70° to 160° to each other.

11. The lock unit according to claim 7 or according to claim 7 and any of claims 8 to 10, **characterized in that**, if the coupling mechanism (K) comprises at least one slotted link guide, on the driver coupling member (8) a guide element (86a) of the at least one slotted link guide is provided, which is shiftably held on a guide link (680, 9).

12. The lock unit according to claims 8 and 11, **characterized in that** the guide element (86a) of the driver coupling member (8) is shiftably held both on the adjustable guide link (680) and on the guide link (9) immovable with respect to the carrier (1), and the guide links (680, 9) overlap at least in part.

13. The lock unit according to any of claims 1 to 7, **characterized in that**, if the coupling mechanism (K) comprises at least one spring element (F2) applying a pretensioning force, the beginning of the idle path, based on an adjusting movement of the actuating element (6) for pivoting the arresting element (3) into its unlocking position, is defined by a mechanical stop against which the actuator coupling member (8.1) abuts at the end of the one sub-section.

14. The lock unit according to any of claims 1 to 7 or 13, **characterized in that**, if the coupling mechanism (K) comprises at least one spring element (F2) applying a pretensioning force, the spring element (F2) of the coupling mechanism (K) is provided in addition to the at least one return spring (F1), which pretensions the actuating element (6) in the direction of a starting position from which the actuating element (6) is to be adjusted in the direction of an end position for pivoting the arresting element (3) into its unlocking position.

15. A vehicle seat comprising a lock unit (S) according to any of the preceding claims.

## Revendications

1. Ensemble serrure pour un véhicule, avec
- un support (1),
- un élément de verrouillage (2) pouvant pivoter entre une position de verrouillage et une position de desserrage sur le support (1),
- un élément de blocage (3) pouvant pivoter entre une position de blocage et une position de déverrouillage sur le support (1), qui bloque, dans sa position de blocage, l'élément de verrouillage (2) présent dans la position de verrouillage pour empêcher un déplacement dans la position de desserrage et permet, dans sa position de déverrouillage, un déplacement de l'élément de verrouillage (2) depuis la position de verrouillage dans sa position de desserrage, et
- un élément d'actionnement (6) pouvant être déplacé à l'intérieur d'une zone de déplacement sur le support (1), pour faire pivoter l'élément de blocage (3) depuis la position de blocage en direction de la position de déverrouillage,
dans lequel l'élément d'actionnement (6) est couplé à l'élément de blocage (3) par l'intermédiaire d'un mécanisme de couplage (K), par l'intermédiaire duquel un mouvement de déplacement de l'élément d'actionnement (3) peut être converti seulement dans une zone partielle de la zone de déplacement de l'élément d'actionnement (6) en un mouvement par pivotement de l'élément de blocage (3) en direction de sa position de déverrouillage,
**caractérisé en ce**
**que** le mécanisme de couplage (K) comprend au moins une coulisse de guidage pour la conversion d'un mouvement de déplacement de l'élément d'actionnement (6) en un mouvement par pivotement de l'élément de blocage (3), dans lequel l'au moins un guidage à coulisse comprend une coulisse de guidage (9) immobile par rapport au support (1), par rapport à laquelle l'élément d'actionnement (6) peut être déplacé,
ou
**que** le mécanisme de couplage (K) comprend au moins un élément de ressort (F2) appliquant une force de précontrainte, contre la force de précontrainte duquel l'élément d'actionnement (6) peut être déplacé à l'intérieur de sa zone de déplacement une fois pour surmonter un trajet à vide, dans lequel l'élément d'actionnement (6) est précontraint par l'au moins un élément de ressort (F2) par rapport à un organe de couplage actionneur (8.1) pouvant être déplacé du mécanisme de couplage (K), dans lequel l'organe de couplage actionneur (8.1) peut être déplacé conjointement avec l'élément d'actionnement (6) pendant un déplacement de l'élément d'actionnement (6) dans une zone partielle de la zone de déplacement, dans laquelle il résulte du déplacement de l'élément d'actionnement (6) un mouvement par pivotement de l'élément de blocage (3) en ce qu'une force de déplacement appliquée sur l'élément d'actionnement (6) peut être transmise par l'intermédiaire de l'au moins un élément de ressort (F2) sur l'organe de couplage actionneur (8.1), et dans l'autre zone partielle, dans laquelle le trajet à vide est à surmonter, l'élément d'actionnement (6) peut être déplacé par rapport à l'organe de couplage actionneur (8.1) à l'encontre de la force de précontrainte appliquée par l'au moins un élément de ressort (F2).

2. Ensemble serrure selon la revendication 1, **caractérisé en ce qu'**une fonction de course à vise est intégrée dans l'ensemble serrure (S) par l'intermédiaire du mécanisme de couplage (K), où l'élément d'actionnement (6) peut être déplacé sur au moins un trajet à vide de sa zone de déplacement pour défaire un verrouillage fourni par l'ensemble serrure (S) sans provoquer un mouvement par pivotement de l'élément de blocage (3).

3. Ensemble serrure selon la revendication 2, **caractérisé en ce que** le trajet à vide est prévu pour déplacer l'élément de blocage (3) depuis sa position de blocage en direction d'une position de déverrouillage
- au début de la zone de déplacement,
- au milieu de la zone de déplacement,
- à la fin de la zone de déplacement ou
- au début ou à la fin de la zone de déplacement,
par rapport à une position de départ de l'élément d'actionnement (6), depuis laquelle l'élément d'actionnement (6) peut être déplacé dans une position finale à l'intérieur de la zone de déplacement.

4. Ensemble serrure selon l'une quelconque des revendications 1 à 3, **caractérisé en ce que** l'élément d'actionnement (6) est monté de manière à pouvoir pivoter et/ou sur le support (1).

5. Ensemble serrure selon l'une quelconque des revendications précédentes, **caractérisé en ce que** le mécanisme de couplage (K) comprend un élément d'entraînement (7) monté de manière à pouvoir tourner de manière coaxiale par rapport à un axe de rotation (D3) de l'élément de blocage (3), qui est en prise par complémentarité de forme avec l'élément de blocage (3).

6. Ensemble serrure selon la revendication 5, **caractérisé en ce qu'**est prévue sur l'élément d'entraînement (7) pour la prise par complémentarité de forme avec l'élément de blocage (3) une section d'entraînement (71), qui dépasse de manière axiale par rapport à l'axe de rotation (7) de l'élément de blocage (3).

7. Ensemble serrure selon la revendication 5 ou 6, **caractérisé en ce que** le mécanisme de couplage (K) comprend au moins un organe de couplage d'entraînement (8, 8.2), qui est articulé de manière excentrique sur l'élément d'entraînement (7) par rapport à l'axe de rotation (D3) de l'élément de blocage (3).

8. Ensemble serrure selon l'une quelconque des revendications précédentes, **caractérisé en ce que**, dans la mesure où le mécanisme de couplage (K) comprend au moins un guidage à coulisse, l'au moins un guidage à coulisse comprend une coulisse de guidage (680) pouvant être déplacée avec l'élément d'actionnement (6).

9. Ensemble serrure selon l'une quelconque des revendications précédentes, **caractérisé en ce que**, dans la mesure où le mécanisme de couplage (K) comprend au moins un guidage à coulisse, la coulisse de guidage (9) immobile par rapport au support (1) présente deux sections de coulisse (9A, 9B), qui se distinguent l'une de l'autre en ce qui concerne un rapport de démultiplication mis en oeuvre ici entre un mouvement de déplacement de l'élément d'actionnement (6) et un mouvement par pivotement en résultant de l'élément de blocage (3).

10. Ensemble serrure selon la revendication 9, **caractérisé en ce que** les deux sections de coulisse (9A, 9B) définissent deux sections d'une voie de guidage pour un élément de guidage (86a), à guider le long de la coulisse de guidage (9), de l'au moins un guidage à coulisse, qui sont orientées l'une par rapport à l'autre selon un angle (α) dans la plage de 70° à 160°.

11. Ensemble serrure selon la revendication 7 ou selon la revendication 7 et l'une quelconque des revendications 8 à 10, **caractérisé en ce que**, dans la mesure où le mécanisme de couplage (K) comprend au moins un guidage à coulisse, un élément de guidage (86a) de l'au moins un guidage à coulisse est prévu sur l'organe de couplage d'entraînement (8), lequel est maintenu de manière à pouvoir coulisser sur une coulisse de guidage (680, 9).

12. Ensemble serrure selon les revendications 8 et 11, **caractérisé en ce que** l'élément de guidage (86a) de l'organe de couplage d'entraînement (8) est maintenu de manière à pouvoir coulisser à la fois sur la coulisse de guidage (680) pouvant être déplacée et sur la coulisse de guidage (9) immobile par rapport au support (1) et les coulisses de guidage (680, 9) se recouvrent au moins en partie.

13. Ensemble serrure selon l'une quelconque des revendications 1 à 7, **caractérisé en ce que**, dans la mesure où le mécanisme de couplage (K) comprend au moins un élément de ressort (F2) appliquant une force de précontrainte, le début du trajet à vide est défini, par rapport à un mouvement de déplacement de l'élément d'actionnement (6) pour faire pivoter l'élément de blocage (3) dans sa position de déverrouillage, par une butée mécanique, sur laquelle l'organe de couplage actionneur (8.1) vient buter à la fin d'une zone partielle.

14. Ensemble serrure selon l'une quelconque des revendications 1 à 7 ou 13, **caractérisé en ce que**, dans la mesure où le mécanisme de couplage (K) comprend au moins un élément de ressort (F2) appliquant une force de précontrainte, l'élément de ressort (F2) du mécanisme de couplage (K) est prévu en plus d'au moins un ressort de rappel (F1), qui précontraint l'élément d'actionnement (6) en direction d'une position de départ, depuis laquelle l'élément d'actionnement (6) est à déplacer en direction d'une position finale pour un pivotement de l'élément de blocage (3) dans sa position de déverrouillage.

15. Siège de véhicule avec un ensemble serrure (S) selon l'une quelconque des revendications précédentes
